# EUROPÄISCHE PATENTSCHRIFT

(11) **EP 3 022 083 B1**
(45) Veröffentlichungstag und Bekanntmachung des Hinweises auf die Patenterteilung: **17.04.2019**
(21) Anmeldenummer: 14733080.7
(22) Anmeldetag: 06.06.2014
(51) Int. Cl.: B60N 2/90, B60N 2/02

(54) **FAHRZEUGSITZ FÜR EIN KRAFTFAHRZEUG**
VEHICLE SEAT FOR A MOTOR VEHICLE
SIÈGE DE VÉHICULE POUR VÉHICULE AUTOMOBILE

(30) Priorität: 17.07.2013 DE 102013011929
(43) Veröffentlichungstag der Anmeldung: 25.05.2016
(73) Patentinhaber: Audi AG, 85045 Ingolstadt (DE)
(72) Erfinder: LORENZ, Stephan, 80939 München (DE); BUCHHOLZ, Jan, 84030 Ergolding (DE)
(86) Internationale Anmeldenummer: PCT/EP2014/001557
(87) Internationale Veröffentlichungsnummer: WO 2015/007358

(56) Entgegenhaltungen:
- WO-A2-2006/076898
- DE-A1-102006 012 784
- DE-A1-102007 032 449

## Beschreibung

Die Erfindung betrifft einen Fahrzeugsitz für ein Kraftfahrzeug, umfassend eine verstellbare Sitzfläche, eine verstellbare Lehnenfläche und sitzseitig und/oder lehnenseitig vorgesehene verstellbare Seitenwangen.

In Zukunft wird ein teilautonomes bzw. stark assistiertes Fahren immer weiter in den Vordergrund rücken. Hierbei wird der Fahrer von der primären Fahraufgabe zumindest teilweise entlastet, indem das Fahrzeug selbst zumindest teilweise die Längs- und Querführung übernimmt respektive den Fahrer bei einer Reihe von Fahraufgaben unterstützt. Je höher der Umfang oder Grad des autopilotierten Fahrens ist, umso reduzierter ist die Einbindung des Fahrers in den eigentlichen Fahrbetrieb. Dies ermöglicht es dem Fahrer, sich anderen Tätigkeiten zu widmen, beispielsweise einer verstärkten Kommunikation mit dem Beifahrer oder den Fondpassagieren, wie auch die Möglichkeit besteht, bürotypische Tätigkeiten wie Lesen und Schreiben von E-Mails und Ähnlichem während der Fahrt vorzunehmen. Auch kann das laufende Entertainmentprogramm wesentlich intensiver und konzentrierter wahrgenommen werden, da sich der Fahrer nur in reduziertem Umfang auf die Fahraufgabe konzentrieren muss.

Da sich unmittelbar vor dem Fahrer das Lenkrad befindet, ist mitunter für parallele Arbeiten wie beispielsweise die Nutzung eines Laptops oder Ähnliches wenig Platz gegeben. Auch ist die Kommunikation mit dem Beifahrer oder den Fondpassieren aufgrund der Sitzausrichtung des Fahrersitzes in Richtung der Fahrzeuglängsachse schwierig, da sich der Fahrer, wenn er sich dem Beifahrer oder den Fondpassieren zuwenden möchte, doch relativ weit auf dem Sitz verdrehen muss und dies eine für die Fahraufgabe optimierte Sitzgeometrie nicht oder nur eingeschränkt zulässt..

Der Erfindung liegt damit das Problem zugrunde, einen Fahrzeugsitz anzugeben, der auf einfache Weise die Einnahme einer geänderten Sitzhaltung ermöglicht.

Zur Lösung dieses Problems ist bei einem Fahrzeugsitz der eingangs genannten Art erfindungsgemäß vorgesehen, dass die ein Paar bildenden und einander gegenüberliegenden Seitenwangen unterschiedlich in ihrer Größe oder Geometrie veränderbar sind, und dass die Sitzfläche und/oder die Lehnenfläche zu einer Seite hin verkippbar ist, wozu elektromechanische oder pneumatische Verstellmittel vorgesehen sind.

Bei dem erfindungsgemäßen Fahrzeug mit einem Fahrzeugsitz besteht folglich die Möglichkeit, ihn durch Veränderung der Größe/Geometrie der Seitenwangen und räumliche Ausrichtung der Sitzfläche oder der Lehne so einzurichten, dass der Fahrer automatisch leicht zur Fahrzeugmitte hin "gedreht" sitzt, er also rein von der Sitzhaltung her aufgrund der Sitzverstellung etwas weiter dem Beifahrer zugewandt ist oder ihm durch die geänderte Kontur eine leichtere Drehung im Sitz ermöglicht wird. Dies führt dazu, dass er quasi leicht seitlich verkippt relativ zum Lenkrad sitzt, so dass dieses nicht mehr unmittelbar vor ihm, platzraubend, positioniert ist, wie er auch dem Beifahrer leicht zugewandt ist, was die Kommunikation zur Seite und nach hinten verbessert.

Um dies zu ermöglichen sind entweder die sitzseitigen und/oder auch die lehnenseitigen Seitenwangen in ihrer Größe oder Geometrie veränderbar, und zwar unterschiedlich, d. h., dass die eine Seitenwange beispielsweise verkleinert werden kann, während die andere Seitenwange vergrößert wird. Konkret kann beispielsweise die innere, also näher zum Beifahrersitz befindliche Seitenwange verkleinert werden respektive in Richtung des Beifahrersitzes verkippt werden, während die andere, äußere Seitenwange vergrößert wird, um eine bessere Rückabstützung zu bieten, wie auch den Fahrer hierdurch leicht zu verdrehen. Auch besteht die Möglichkeit, die äußere Seitenwange ebenfalls in Richtung des Beifahrers leicht zu verkippen, also in ihrer Geometrie zu ändern, so dass auch hierüber eine Bewegungskomponente hin zu einer leicht verdrehten Oberkörperhaltung respektive Sitzposition erreicht wird.

Erfindungsgemäss ist es vorgesehen, die Sitzfläche und/oder die Lehne zu einer Seite, im Falle des Fahrersitzes also in Richtung des Beifahrers, zu verkippen. Dies erfolgt beispielsweise durch Elemente im Bereich Sitz- und/oder Lehnenspiegel, die sich im Volumen bzw. ihrer Kontur verändern lassen. D. h., dass die Sitzfläche und/oder die Lehne quasi zur Fahrzeuglängsachse hin angestellt wird, so dass der Fahrer auch hierdurch eine leicht "verkippte" respektive "verdrehte" Körperhaltung einnimmt. Denn insbesondere die Sitzfläche und die Lehne geben die Grundausrichtung vor, wie der Fahrer sitzt respektive die Körperhaltung ist. Die Sitzfläche respektive die Lehne können hierzu einseitig anstellbar respektive absenkbar sein, so dass sie folglich schräg bezüglich der Fahrzeuglängsachse verkippt sind.

Zur Verstellung der Seitenwangen, der Sitzfläche und/oder der Lehnenfläche sind entsprechende elektromechanische oder pneumatische Verstellmittel vorgesehen, beispielsweise entsprechende Luftbalge, die im Bereich der Seitenwangen aufgeblasen oder abgelassen werden können, oder entsprechende flächige Polsterelemente, die unterhalb der Sitzfläche respektive Lehnenfläche angeordnet sind und über entsprechende elektromechanische Verstellmittel wie Elektromotoren und Ähnlichem verschoben werden können, um so letztlich die Sitz- oder Lehnenfläche formen zu können. Die Ansteuerung der elektromechanischen oder pneumatischen Verstellmittel erfolgt natürlich über eine geeignete Steuerungseinrichtung, die beispielsweise durch Betätigen einer Taste vom Fahrer oder - sollte es sich bei dem erfindungsgemäßen Fahrzeugsitz um einen Beifahrersitz handeln - von diesem zu betätigen ist. Alternativ ist auch eine automatische situationsabhängige Auslösung möglich. Die gewünschten Einstellungen, also letztlich die "Endgeometrie" des Sitzes kann dabei vom Bediener frei programmiert werden, innerhalb der maximalen Verstellmöglichkeiten, die die Verstellmittel bieten oder situationsabhängig vom System ermittelt werden. Drückt also beispielsweise der Fahrer die entsprechende Taste, oder das entsprechende Feld am Touchscreen und Ähnlichem, so verfährt der Sitz automatisch in die entsprechende Position für eine gedrehte und entspanntere Körperhaltung.

Wie beschrieben ist es zweckmäßig, wenn die eine Seitenwange eines Paares verkleinerbar und die andere Seitenwange vergrößerbar ist, oder wenn beide Seitenwangen in die gleiche Richtung kippbar sind. Hierdurch können die entsprechenden Wangenverstellungen, die zur Induzierung einer Körperdrehung zweckmäßig sind, erreicht werden. Vorteilhaft ist es dabei, wenn die in ihrer Größe reduzierbare Seitenwange deutlich unterhalb der "Standardgröße", wie sie die Seitenwange bei normalem Fahrbetrieb hat, reduzierbar ist, so dass die verkleinerte Seitenwange, üblicherweise die innere Seitenwange, kein Hindernis mehr bietet. Demgegenüber ist es zweckmäßig, wenn die äußere Seitenwange deutlich über die "Standardgröße", wie sie sie bei normaler Fahrt hat, vergrößert werden kann, so dass sich mit der stark vergrößerten Seitenwange bei gedrehter Oberkörperhaltung eine größerflächige Rückenabstützung erreichen lässt.

Um insbesondere diese starke Vergrößerung zu ermöglichen, aber auch im Falle der verkleinerbaren Seitenwange, ist es zweckmäßig, wenn ein Bezug der Seitenwangen mit Dehnfalten versehen oder gegen eine Rückstellkraft oder über eine Nachführeinheit aus einem Speicher herausziehbar ist. Denn die starke Geometrie- respektive Größenveränderung wirkt sich natürlich auch auf den Wangenbezug aus, der diese entsprechenden Veränderungen mitvollziehen muss. D. h., dass genügend Bezugmaterial vorhanden sein muss respektive eine hinreichende Elastizität gegeben sein muss, damit der Wangenbezug sämtliche Verstellbewegungen mitmachen kann.

Weiterhin ist es zweckmäßig, wenn die Sitzfläche und die Lehnenfläche gemeinsam in die gleiche Richtung verkippbar sind. Werden beide simultan in die gleiche Richtung verkippt, so wird folglich sowohl quasi in der Horizontalebene (durch die Sitzfläche) als auch in die Vertikalebene (durch die Lehne) die entsprechende Drehbewegung in der gleichen Richtung induziert, was für den Fahrer angenehm ist, da er quasi über den ganzen Sitzbereich positionsmäßig gleichmäßig geführt ist.

Zur Verkippung der Sitzfläche oder der Lehnenfläche können unterhalb der jeweiligen Fläche bewegliche Flächenelemente vorgesehen sein, die zur Flächenverformung über das oder die Verstellmittel bewegbar sind. Diese Flächenelemente drücken von unten gegen den Sitz- oder Lehnenbezug respektive entsprechende Schaumauflagen und Ähnlichem, formen also letztlich die Sitz- oder Lehnenfläche. Auch ist es denkbar, eine zusätzliche Stützfläche an der Lehnenrückseite, welche um eine Achse geschwenkt werden kann, zu integrieren.

Natürlich besteht stets die Möglichkeit, zusätzlich auch die Sitzflächen- oder Lehnenneigung um eine senkrecht auf der Fahrzeuglängsachse stehende Horizontalachse zu verändern, also insbesondere die Lehne quasi nach hinten zu schwenken, was für ein noch entspannteres Sitzen von Vorteil ist.

Einem entspannteren Sitzen ist ferner zuträglich, wenn unterhalb der Sitzfläche vorgesehene Federelemente in ihrer Härte veränderbar sind, oder wenn unterhalb der Sitzfläche zusätzliche zuschaltbare Elemente, die die Federbarkeit der Sitzfläche verändern, vorgesehen sind. Hierdurch besteht also die Möglichkeit, das Sitzverhalten weicher zu gestalten, so dass der Fahrer geringfügig weicher und tiefer "in die Sitzfläche sinkt". Dies kann durch gezielte Beeinflussung der Härte der Sitzunterfederung erfolgen, oder durch temporäre Entfernung etwaiger die Federbarkeit des Sitzes beeinflussender zuschaltbarer Elemente wie Versteifungsplatten und -schienen, Pneumatikelemente oder Ähnliches, die hierzu beispielsweise über Verstellelemente räumlich bewegt werden können.

Insgesamt bietet der erfindungsgemäße Fahrzeugsitz die Möglichkeit, seine Form respektive Geometrie sowie seine Härte reversibel zu verändern, so dass für den Fahrer eine optimale Sitzposition für die aktive manuelle Fahrt gegeben ist, wie durch entsprechende Geometrieänderung auch eine angenehme Sitzposition in einer (teil-)autonomen Fahrt einstellbar ist.

Daneben betrifft die Erfindung ferner ein Kraftfahrzeug, umfassend wenigstens einen, vorzugsweise zwei nebeneinander angeordnete Fahrzeugsitze nach einem der vorangehenden Ansprüche. Vorzugsweise ist zumindest der Fahrersitz erfindungsgemäß ausgerüstet. Im Kraftfahrzeug ist natürlich ein oder sind entsprechende mehrere Bedienelemente vorgesehen, die die entsprechende Sitzverstellung ermöglichen. Da bei maximaler Aufbaustufe sowohl die sitzseitigen als auch die lehnenseitigen Seitenwangen wie auch die Sitzfläche und die Lehne entsprechend verstellt werden können, wobei dem Fahrer die Möglichkeit zu einer möglichst individuellen Einstellung gegeben werden soll, ist es zweckmäßig, für die jeweiligen Verstellungen separate Bedienelemente in Form von an einer Seite der unteren Sitzverkleidung positionierte separate Bedienelemente vorzusehen, so dass der Bediener die einzelnen Verstellungen separat und individuell vornehmen kann. Die gewünschten individuellen Einstellungen können sodann gespeichert werden und bei Betätigung einer entsprechenden Taste oder Ähnlichem angesteuert werden. Die zugeordnete Steuerungseinrichtung verbringt sämtliche Verstellmittel sodann in die entsprechende Position, so dass die gewünschte Sitzgeometrie eingestellt wird. Denkbar ist es, ausgehend von einer aktiven Fahrt mit zugeordneter Sitzposition, durch Betätigen der Taste die geänderte Sitzgeometrie für ein (teil-)autonomes Fahren anzusteuern. Wird die Taste erneut betätigt und ändert sich der Fahrbetrieb wieder hin zu einem aktiven Fahrbetrieb, so wird die Sitzposition reversibel wieder zurückgestellt.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen- Fahrzeugsitzes in seiner Grundform,
- Fig. 2: den Fahrzeugsitz aus Fig. 1 mit unterschiedlich großen Seitenwangen und verkippten Sitz- und Lehnenflächen, und
- Fig. 3: eine Prinzipdarstellung eines erfindungsgemäßen Kraftfahrzeugs mit einem erfindungsgemäßen Fahrzeugsitz.

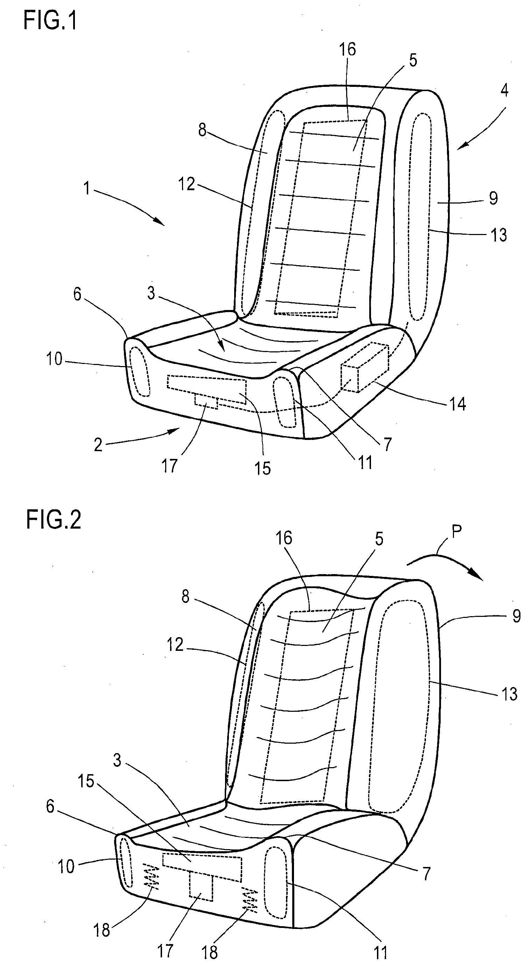

Fig. 1 zeigt einen erfindungsgemäßen Fahrzeugsitz 1 für ein Kraftfahrzeug. Er weist ein im Wesentlichen horizontal angeordnetes Sitzteil 2 mit einer Sitzfläche 3 und eine relativ zum Sitzteil 2 um eine Horizontalachse verkippbare Lehne 4 mit einer Lehnenfläche 5 auf.

Das Sitzteil weist zwei Seitenwangen 6, 7 auf, die in ihrer Größe und/oder Geometrie veränderbar sind. In gleicher Weise weist auch das Lehnenteil 4 zwei Seitenwangen 8, 9 auf, die ebenfalls in ihrer Größe und/oder Geometrie veränderbar sind. Um dies zu ermöglichen sind entsprechende Verstellmittel vorgesehen, bei denen es sich im gezeigten Ausführungsbeispiel um Luftkissen 10, 11 im Bereich der Seitenwangen 6, 7 respektive um Luftkissen 12, 13 im Bereich der Seitenwangen 8, 9 handelt. Es sind also pneumatische Verstellmittel vorgesehen, die über eine entsprechende Steuerungseinrichtung 14 angesteuert werden können, also entsprechend über eine Pumpe aufgepumpt respektive abgelassen werden können.

Im gezeigten Beispiel gemäß Fig. 1 sind die Seitenwangen 6, 7 und 8, 9 symmetrisch, sie sind also gleichgroß respektive symmetrisch relativ zur Sitzfläche 3 bzw. zur Lehnenfläche 5 ausgerichtet. D. h., dass die entsprechenden Luftkissen 10, 11 und 12, 13 gleichmäßig aufgeblasen sind. Über die Seitenwangen 6, 7 und 8, 9 erfährt die Person, die auf dem Fahrzeugsitz 1 sitzt, einen guten Seitenhalt.

Die Sitzfläche 3 und die Lehnenfläche 5 sind ebenfalls umverformt, sie weisen beide in Fahrzeuglängsrichtung. Auch sie können jedoch relativ zu Fahrzeuglängsachse verkippt werden, wozu der Sitzfläche 3 und der Lehnenfläche 5 ebenfalls entsprechende Verstellmittel hier in Form von keilförmigen Stützelementen 15, 16 zugeordnet sind, die über geeignete Stellelemente 17 bewegt und in ihrer Form respektive Ebenenlage verstellt werden können.

In der in Fig. 1 gezeigten Form ist der Fahrzeugsitz für ein übliches aktives Fahren eingerichtet.

Verfügt das Kraftfahrzeug, in dem der Fahrzeugsitz 1 verbaut ist, über die Möglichkeit eines (teil-)autonomen Fahrbetriebs, der individuell angewählt werden kann, so kann der Fahrer des Weiteren veranlassen, dass der Fahrzeugsitz 1 automatisch über die entsprechenden Verstellmittel respektive durch entsprechende Ansteuerung derselben über die Steuerungseinrichtung 14, die auch die Stellelemente 17 mit ansteuert, in eine größenmäßig und geometriemäßig geänderte Form verbracht wird. Dies ist exemplarisch in Fig. 2 gezeigt.

Wie Fig. 2 zeigt, ist die Seitenwange 6 deutlich verkleinert gegenüber der Grundform aus Fig. 1. Demgegenüber ist die Seitenwange 7 gegenüber der Grundform aus Fig. 1 deutlich vergrößert. Dies geschieht, indem das Luftkissen 10 abgelassen wird, sich dieses also deutlich verkleinert, während das Luftkissen 11 stark aufgeblasen wird, so dass sich die Seitenwange 7 stark vergrößert.

Parallel dazu ist die Seitenwange 8 an der Lehne 4 gegenüber der Grundform aus Fig. 1 ebenfalls deutlich verkleinert, was durch Ablassen des Luftkissens 12 erfolgt. Demgegenüber ist die zweite lehnenseitige Seitenwange 9 stark vergrößert, das dortige Luftkissen 13 ist stark aufgeblasen.

Wie Fig. 2 zeigt, sind folglich die beiden inneren Seitenwangen 6 und 8 stark reduziert, während die beiden äußeren Seitenwangen 7 und 9 stark vergrößert sind.

Gleichzeitig ist dort die Sitzfläche 3 und die Lehnenfläche 5 verkippt worden. Dies geschieht, indem zum einen über ein Stellelement 17 das Flächenelement 15 angehoben wurde und die Sitzfläche 3 respektive deren Geometrie nunmehr definiert. D. h., dass der Sitzbezug respektive die darunter befindliche Polsterung letztlich über das Flächenelement 15 quasi leicht angehoben und geformt wird. Ersichtlich ist die Sitzfläche 3 in Fig. 2 verkippt, bezogen auf die Fahrzeuglängsachse wäre sie zur Fahrzeuglängsachse hin geneigt.

In entsprechender Weise ist auch die Lehnenfläche 5 zur Fahrzeuglängsachse hin geneigt. Dies geschieht, indem das keilförmige Flächenelement 16 über ein nicht näher gezeigtes Stellelement 17 gegen die Rückseite der Lehnenfläche 5 gedrückt wird, so dass diese der Keilflächenform des Flächenelements 16 folgt. D. h., dass beide Flächen 3 und 5 zur Fahrzeuglängsachse hin verkippt sind.

Dies führt dazu, dass der Fahrer insgesamt eine leichte Verdrehung relativ zur Fahrzeuglängsachse erfährt. Gleichzeitig ist er über die stark vergrößerten Seitenwangen 7 und 9 rückseitig bzw. zur Fahrzeugaußenseite hin abgestützt, so dass er insgesamt einerseits angenehm, andererseits aber sicher und definiert ausgerichtet leicht verdreht auf dem Sitz sitzt.

Wie Fig. 2 ferner zeigt, sind unterhalb der Sitzfläche 3 exemplarisch zwei Federelemente 18 gezeigt. Diese können durch geeignete Mittel in ihrer Federhärte verstellt werden, so dass folglich die Härte der Sitzfederung variiert werden kann. Während die Sitzfläche 3 in der Grundstellung gemäß Fig. 1 etwas härter gefedert ist, ist die Sitzfläche 3 in der verkippten Stellung gemäß Fig. 2 weicher gefedert, so dass der Fahrer noch angenehmer sitzt.

Es ist an dieser Stelle darauf hinzuweisen, dass die Fig. 1 und 2 lediglich Prinzipdarstellungen sind. Selbstverständlich sind die entsprechenden Flächenelemente 15 und 16 grundsätzlich in ihrer Form auch anders wählbar, es können auch bezüglich der Sitzfläche 3 und der Lehnenfläche 5 jeweils mehrere solcher Flächenelemente vorgesehen sein, die auch individuell angesteuert werden können. Ihnen gemein ist jedoch, dass sie in der Lage sind, die jeweilige Verkippung der Sitzfläche 3 respektive der Lehnenfläche 5 zu erwirken.

Auch können anstelle der Luftkissen 10, 11 bzw. 12, 13 andere Möglichkeiten vorgesehen sein, um die Seitenwangengröße bzw. -geometrie zu verändern. Denkbar sind mechanische Elemente wie Stäbe oder Ähnliches, die geschoben oder gekippt werden können etc.

Der Fahrzeugsitz ist hinsichtlich seines Bezuges derart ausgestaltet, dass der Bezug die entsprechenden Geometrieänderungen ohne Weiteres mitvollzieht, hierbei also nicht übermäßig gedehnt wird. Dies kann dadurch erfolgen, dass beispielsweise entsprechende elastische Abschnitte insbesondere im Bereich der sich größenmäßig stark verändernden Seitenwangen vorgesehen sind, die eine gewisse Elastizität des Sitzbezugs ermöglichen, oder dass eine Art Bezugsspeicher gegeben ist, aus dem der Bezug beim Aufblasen der Seitenwange herausgezogen werden kann, bzw. in den er durch entsprechende Rückstellelemente respektive Elastizitäten eingezogen wird und Ähnliches.

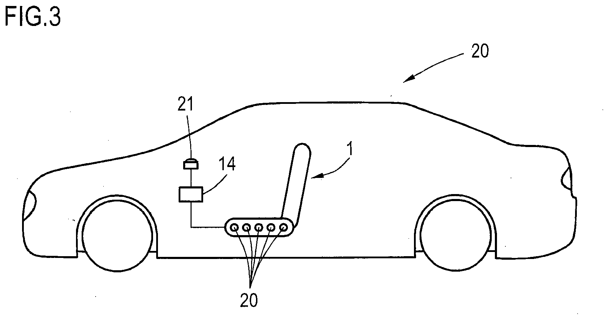

Fig. 3 zeigt exemplarisch eine Prinzipdarstellung eines erfindungsgemäßen Kraftfahrzeugs 19, in dem exemplarisch ein Fahrzeugsitz 1 verbaut ist. Dieser weist an seiner Seite eine Vielzahl einzelner Bedienelemente 20 auf, über die einzelne Verstellmittel, die im Fahrzeugsitz integriert sind, einzeln betätigt werden können. Neben den üblichen Verstellmitteln, die zum Verschwenken der Lehne 4 relativ zum Sitz 2 dienen (wie durch den Pfeil P in Fig. 2 dargestellt), oder die zum Bewegen einer Lordosenstütze und Ähnliches oder zum Anheben und Absenken der Sitzfläche etc. dienen, sind entsprechende Bedienelemente vorgesehen, die die individuelle Einstellung der Seitenwangen 6, 7, 8, 9 wie auch der Sitzflächen 3 und der Lehnenflächen 5 ermöglichen, um eine definierte Sitzgeometrie, wie in Fig. 2 gezeigt, individuell einstellen zu können. Diese einmal eingestellte Sitzposition kann entsprechend gespeichert werden. Dies kann wiederum im Steuergerät 14 erfolgen, das hier exemplarisch extern zum Sitz 1 gezeigt ist. Der Fahrer kann nun, wenn er die Sitzgeometrie ausgehend von der nach Fig. 1 zu der nach Fig. 2 ändern möchte, beispielsweise eine Taste 21 betätigen, woraufhin die Steuerungseinrichtung 14 alle ihr zugeordneten Verstellmittel ansteuert, um die Sitzänderung zu realisieren, also den Fahrzeugsitz von der Grundform gemäß Fig. 1 in die geänderte Form gemäß Fig. 2 "umzuformen". Selbstverständlich kann anstelle einer Taste auch ein Bedienfeld an einem Touchscreen oder Ähnliches zur Bedienung verwendet werden. Eine Rückführung in die Grundform kann beispielsweise durch erneutes Betätigen der Taste 21 erfolgen.

## Patentansprüche

1. Kraftfahrzeug mit einem Fahrzeugsitz, umfassend eine verstellbare Sitzfläche, eine verstellbare Lehnenfläche und sitzseitig und/oder lehnenseitig vorgesehene verstellbare, ein Paar bildende und einander gegenüberliegende Seitenwangen (6, 7, 8, 9), die unterschiedlich in ihrer Größe oder Geometrie veränderbar sind,
**dadurch gekennzeichnet,**
**dass** die Sitzfläche (3) und/oder die Lehnenfläche (5) in einem zumindest teilautonomen Betriebsmodus des Kraftfahrzeugs zu einer Seite hin verkippbar ist, um eine relativ zum Lenkrad des Kraftfahrzeugs gedrehte Sitzposition zu schaffen, wozu elektromechanische oder pneumatische Verstellmittel (10, 11, 12, 13, 15, 16, 17) vorgesehen sind.

2. Kraftfahrzeug nach Anspruch 1,
**dadurch gekennzeichnet,**
**dass** die eine Seitenwange (6, 7, 8, 9) eines Paares verkleinerbar und die andere Seitenwange (6, 7, 8, 9) vergrößerbar ist, oder dass beide Seitenwangen (6, 7, 8, 9) in die gleiche Richtung kippbar sind.

3. Fahrzeug nach Anspruch 2,
**dadurch gekennzeichnet,**
**dass** ein Bezug der Seitenwangen (6, 7, 8, 9) mit Dehnfalten versehen oder gegen eine Rückstellkraft oder über eine Nachführeinheit aus einem Speicher herausziehbar ist.

4. Kraftfahrzeug nach einem der vorangehenden Ansprüche,
**dadurch gekennzeichnet,**
**dass** die Sitzfläche (3) und die Lehnenfläche (5) gemeinsam in die gleiche Richtung verkippbar sind.

5. Kraftfahrzeug nach einem der vorangehenden Ansprüche,
**dadurch gekennzeichnet,**
**dass** zur Verkippung der Sitzfläche (3) oder der Lehnenfläche (5) unterhalb der jeweiligen Fläche bewegliche Flächenelemente (15, 17) vorgesehen sind, die zur Flächenverformung über das oder die Verstellmittel (17) bewegbar sind.

6. Kraftfahrzeug nach einem der vorangehenden Ansprüche,
**dadurch gekennzeichnet,**
**dass** unterhalb der Sitzfläche (3) vorgesehene Federelemente (18) in ihrer Härte veränderbar sind, oder dass unterhalb der Sitzfläche (3) zusätzliche zuschaltbare Elemente, die die Federbarkeit der Sitzfläche (3) verändern, vorgesehen sind.

7. Kraftfahrzeug nach einem der vorangehenden Ansprüche, umfassend zwei nebeneinander angeordnete Fahrzeugsitze (1).

## Claims

1. Motor vehicle with a vehicle seat, comprising an adjustable seat surface, an adjustable backrest surface, and adjustable lateral parts (6, 7, 8, 9) which are provided on the seat side and/or on the backrest side forming a pair and opposing one another, which can be varied differentially in size and geometry,
**characterised in that**
in an at least partially autonomous mode of operation of the motor vehicle the seat surface (3) and/or the backrest surface (5) can be tilted to one side in order to create a seat position which is rotated relative to the steering wheel of the motor vehicle, and electromechanical or pneumatic actuating means (10, 11, 12, 13, 15, 16, 17) are provided for this purpose.

2. Motor vehicle according to claim 1,
**characterised in that**
one lateral part (6, 7, 8, 9) of a pair can be reduced in size and the other side part (6, 7, 8, 9) can be enlarged, or **in that** both side parts (6, 7, 8, 9) can be tilted in the same direction.

3. Vehicle according to claim 2,
**characterised in that**
a cover of the lateral parts (6, 7, 8, 9) is provided with stretch folds or can be pulled out from a storage area against a restoring force or by means of a feeding unit.

4. Motor vehicle according to any one of the preceding claims,
**characterised in that**
the seat surface (3) and the backrest surface (5) can be tilted jointly in the same direction.

5. Motor vehicle according to any one of the preceding claims,
**characterised in that**
surface elements (15, 17) which can be moved via the adjustment means (17) for deformation of the surface are provided in order to tilt the seat surface (3) or the backrest surface (5) below the respective surface.

6. Motor vehicle according to any one of the preceding claims,
**characterised in that**
spring elements (18) provided below the seat surface (3) are variable in their hardness, or **in that** additional activatable elements which change the spring characteristic of the seat surface (3) are provided below the seat surface (3).

7. Motor vehicle according to any one of the preceding claims, comprising two vehicle seats (1) arranged adjacent to one another.

## Revendications

1. Véhicule automobile avec un siège de véhicule, comprenant une surface d'assise réglable, une surface de dossier réglable et des parois latérales (6, 7, 8, 9) opposées l'une à l'autre et formant une paire, réglables prévues côté siège et/ou côté dossier qui sont modifiables différemment dans leur grandeur ou géométrie,
**caractérisé en ce**
**que** la surface d'assise (3) et/ou la surface de dossier (5) est basculable dans un mode de fonctionnement au moins partiellement autonome du véhicule automobile vers un côté afin de créer une position d'assise tournée par rapport au volant du véhicule automobile, pour quoi des moyens de réglage (10, 11, 12, 13, 15, 16, 17) électromécaniques ou pneumatiques sont prévus.

2. Véhicule automobile selon la revendication 1,
**caractérisé en ce**
**que** l'une paroi latérale (6, 7, 8, 9) d'une paire peut être rétrécie et l'autre paroi latérale (6, 7, 8, 9) peut être agrandie, ou que les deux parois latérales (6, 7, 8, 9) sont basculables dans la même direction.

3. Véhicule selon la revendication 2,
**caractérisé en ce**
**qu'**un revêtement des parois latérales (6, 7, 8, 9) est pourvu de plis extensibles ou retirable contre une force de rappel ou par le biais d'une unité d'ajustement d'un accumulateur.

4. Véhicule automobile selon l'une quelconque des revendications précédentes,
**caractérisé en ce**
**que** la surface d'assise (3) et la surface de dossier (5) sont basculables ensemble dans la même direction.

5. Véhicule automobile selon l'une quelconque des revendications précédentes,
**caractérisé en ce**
**que** pour le basculement de la surface d'assise (3) ou la surface de dossier (5) des éléments de surface (15, 17) mobiles sous la surface respective sont prévus, lesquels sont mobiles pour la déformation de surface par le biais du ou des moyen(s) de réglage (17).

6. Véhicule automobile selon l'une quelconque des revendications précédentes,
**caractérisé en ce**
**que** des éléments de ressort (18) prévus sous la surface d'assise (3) sont modifiables dans leur dureté, ou que des éléments supplémentaires pouvant être mis sous tension qui modifient l'aptitude de comportement de ressort de la surface d'assise (3) sont prévus sous la surface d'assise (3).

7. Véhicule automobile selon l'une quelconque des revendications précédentes, comprenant deux sièges de véhicule (1) agencés l'un à côté de l'autre.
